# EUROPÄISCHE PATENTSCHRIFT

(11) **EP 2 004 461 B1**
(45) Veröffentlichungstag und Bekanntmachung des Hinweises auf die Patenterteilung: **20.08.2014**
(21) Anmeldenummer: 07727263.1
(22) Anmeldetag: 23.03.2007
(51) Int. Cl.: B60T 7/12, B60T 7/22, B60W 50/08

(54) **VORRICHTUNG UND VERFAHREN ZUR DEAKTIVIERUNG EINER SICHERHEITSFUNKTION**
DEVICE AND METHOD FOR DEACTIVATING A SAFETY FUNCTION
DISPOSITIF ET PROCÉDÉ POUR DÉSACTIVER UNE FONCTION DE SÉCURITÉ

(30) Priorität: 03.04.2006 DE 102006015489; 03.08.2006 DE 102006036218
(43) Veröffentlichungstag der Anmeldung: 24.12.2008
(73) Patentinhaber: Robert Bosch GmbH, 70442 Stuttgart (DE)
(72) Erfinder: EWERHART, Frank, 74189 Weinsberg (DE); MARCHTHALER, Reiner, 73333 Gingen (DE); LICH, Thomas, 71409 Schwaikheim (DE); STABREY, Stephan, 70376 Stuttgart (DE); GEORGI, Andreas, 71701 Schwieberdingen (DE)
(86) Internationale Anmeldenummer: PCT/EP2007/052789
(87) Internationale Veröffentlichungsnummer: WO 2007/115923

(56) Entgegenhaltungen:
- EP-A2- 1 609 656
- WO-A-2005/061264
- DE-A1- 10 135 742
- DE-A1-102004 022 894
- US-A1- 2005 143 890
- US-B1- 6 742 850

## Beschreibung

### Stand der Technik

Fahrzeugführer werden heute bei der Bewältigung der Fahraufgabe durch eine Vielzahl von Assistenz- und Sicherheitssystemen unterstützt. Hierzu zählen Systeme wie ABS und ESP, ACC, Airbags und andere Rückhaltesysteme. Assistenzsysteme werden heute so ausgelegt, dass der Fahrer jederzeit die volle Kontrolle über das Fahrzeug behält. Dies wird z. B. dadurch realisiert, dass der Fahrer durch einen eigenen Eingriff das betreffende System deaktiviert. So wird z. B. ein ACC abgeschaltet, sobald der Fahrer bremst oder das Fahrpedal betätigt.

In Zukunft werden auch auf Umfeldsensorik basierende Systeme, wie die automatische Notbremsung, in Fahrzeugen Einzug halten. Diese Systeme werden heute so ausgelegt, dass sie nur dann auslösen, wenn ein Unfall unvermeidbar ist. Sie müssen daher nicht zwingend überstimmbar sein.

Sollen Sicherheitssysteme unfallvermeidend Eingreifen, ist eine Überstimmbarkeit erforderlich, um dem Fahrer die Möglichkeit zu geben, durch eigenes Handeln gefährliche Situationen zu entschärfen.

Aus der EP 1 609 656 A2 ist ein Geschwindigkeitsregelsystem mit Abstandssensorik für ein Kraftfahrzeug bekannt, welches nicht nur bei höheren Geschwindigkeiten, sondern auch im Stop&Go-Betrieb automatisch die Einhaltung eines Mindestabstands zu einem vorausfahrenden Fahrzeug, welches vom System als Zielobjekt erkannt ist, gewährleistet. Bei niedrigen Fahrgeschwindigkeiten wird mit Erkennen eines stehenden Zielobjekts eine automatische Abbremsung mit konstanter Verzögerung eingeleitet.

Aus der DE 101 35 742 A1 ist ein Kraftfahrzeug mit einem System für automatische Blickrichtungserkennung und einem System für automatische Hinderniserkennung und automatische Fahrzeugsteuerung und/oder einem System für Abstandsregelung bekannt. Dabei ist eine Betriebsart vorgesehen, in der das System für automatische Hinderniserkennung und automatische Fahrzeugsteuerung und/oder das System für Abstandsregelung aktiv sind, wenn das System für automatische Blickrichtungserkennung mangelnde Aufmerksamkeit des Fahrers feststellt.

Die Merkmale des Oberbegriffs des unabhängigen Anspruchs sind der EP 1 609 656 A2 zu entnehmen.

### Offenbarung der Erfindung

Die Erfindung betrifft ein Verfahren zur Deaktivierung einer Sicherheitsfunktion in einem Kraftfahrzeug. Der Kern der Erfindung besteht darin, dass die Sicherheitsfunktion nach ihrer Aktivierung erst nach Ablauf einer Totzeit durch den Fahrer deaktiviert werden kann. Damit wird vermieden, dass eine unüberlegte Panikreaktion oder Überreaktion des Fahrers zu einer Deaktivierung der Sicherheitsfunktion führt.

Erfindungsgemäß ist weiter vorgesehen, dass es sich bei der Sicherheitsfunktion um die fahrerunabhängige Auslösung eines Bremsvorgangs nach einer detektierten Kollision handelt. Die bewusste Deaktivierung der Bremsung gibt dem Fahrer die Möglichkeit, das Fahrzeug wieder aus dem Unfallbereich zu entfernen.

Eine vorteilhafte Ausgestaltung der Erfindung ist dadurch gekennzeichnet, dass die zeitliche Länge der Totzeit situationsabhängig ist.

Eine vorteilhafte Ausgestaltung der Erfindung ist dadurch gekennzeichnet, dass die zeitliche Länge der Totzeit von einer die Intensität der detektierten Kollision kennzeichnenden Größe abhängt.

Eine vorteilhafte Ausgestaltung der Erfindung ist dadurch gekennzeichnet, dass
- wenigstens eine auf den Fahrer wirkende Kraft ermittelt wird und
- die zeitliche Länge der Totzeit von dieser auf den Fahrer wirkenden Kraft abhängt.

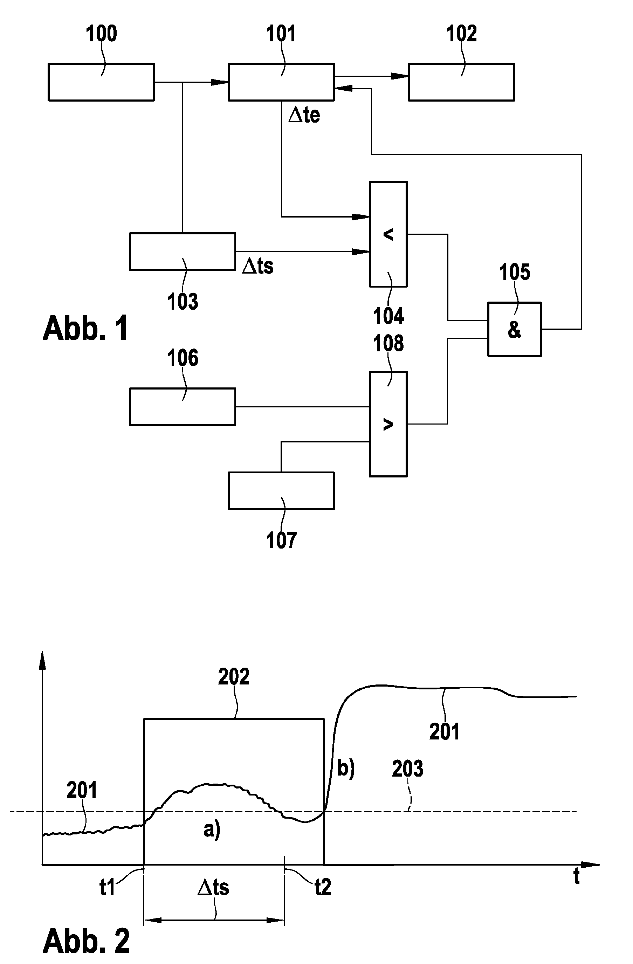

Die Zeichnung umfasst die Abbildungen 1 und 2.

Heutige Sicherheitssysteme sind häufig nicht überstimmbar. Aufgabe der Erfindung ist es, für ein Sicherheitssystem die Überstimmbarkeit durch den Fahrer zu ermöglichen. Bekannte Strategien zur Deaktivierung von Fahrzeugsystemen wie ACC adressieren "normale" Fahrsituationen, in denen mit entsprechenden Fahrerbediengrößen zu rechnen ist. Soll jedoch eine Sicherheitsfunktion betrachtet werden, die in einer Notsituation eingreift, muss mit anderen Reaktionen des Fahrers gerechnet werden. Insbesondere ist in einer plötzlich auftretenden Notsituation von einer Schreckreaktion des Fahrers auszugehen. Mögliche Verhaltensweisen sind z. B. gar keine Reaktion auf das Ereignis, verzögerte Reaktion auf das Ereignis oder Überreaktion.

Fahrerbediengrößen, die während dieser Schreckreaktion auftreten, müssen daher nicht mit einer zielführenden Fahrerreaktion korrespondieren und können daher hinsichtlich eines Überstimmwunsches nur schwer oder überhaupt nicht interpretiert werden.

Kern der Erfindung ist es, einen Eingriff eines Sicherheitssystems nur dann zu beenden, wenn sich die vom Fahrer vorgegebenen Bediengrößen hinsichtlich eines gewollten Überstimmens der Funktion interpretieren lassen.

Eine Sicherheitsfunktion löst zum Beispiel nach der Erkennung einer leichten Kollision eine Vollbremsung aus, um die Schwere einer drohenden Folgekollision zu vermindern. Die Bremsung kann aber auch auf Basis von Umfeldsensorik zur Unfallvermeidung ausgelöst werden.

Durch die erfindungsgemäße Deaktivierungsstrategie wird die automatisch ausgelöste Bremsung erst dann beendet, wenn die vom Fahrer vorgegebenen Bediengrößen hinsichtlich eines gewollten Überstimmens interpretierbar sind. Dies ist frühestens nach Ablauf der Dauer der Schreckreaktion der Fall.

Mit dem erfindungsgemäßen Verfahren wird eine Sicherheitsfunktion also erst dann deaktiviert, wenn nach Ablauf einer angenommenen, situationsabhängigen Schreckreaktionsdauer die Fahrerbediengrößen charakteristische Merkmale eines Überstimmwunsches (z. B. Überschreiten eines Schwellwertes) aufweisen.

Für ein Sicherheitssystem, dass nach einer Fahrzeugkollision wirkt, kann die angenommene Schreckreaktionsdauer z. B. anhand der Schwere der Kollision ermittelt werden.

Die angenommene Schreckreaktionsdauer muss dabei nicht nur die psychologischen Aspekte des Fahrerverhaltens beinhalten. Es können auch physikalische Gegebenheiten wie z. B. auf den Fahrer wirkende Kräfte berücksichtigt werden. So ist zum Beispiel bei einer schweren Kollision davon auszugehen, dass eine Insassenverlagerung aufgrund der wirkenden Beschleunigungen verhindert, dass der Fahrer das Fahrzeug in gewohnter Weise bedienen kann. In diesem Fall können die Bediengrößen keinen Überstimmwunsch des Fahrers anzeigen.

In Abb. 2 ist dies im Bereich a) der Fall: die automatische Bremsung nach dem zum Zeitpunkt t1 auftretenden Ereignis führt dazu, dass der Fahrer nach vom verlagert wird und somit der auf dem Fahrpedal befindliche Fuß eine erhöhte Pedalbetätigung bewirkt (siehe Kurvenverlauf 201). Erst nach Ablauf der erwarteten Schreckreaktionsdauer Δts wird im Bereich b) die Überschreitung der Schwelle 203 als Überstimmwunsch interpretiert und die Bremsung beendet.

Dazu ist in Fig. 2 in Abszissenrichtung die Zeit t aufgetragen, in Ordinatenrichtung sind
- das Ausmaß der Fahrpedalbetätigung, mit 201 bezeichnet,
- die Intensität eines Bremseingriffs der Sicherheitsfunktion, mit 202 bezeichnet, und
- ein Schwellenwert für das Ausmaß der Fahrpedalbetätigung, mit 203 bezeichnet, aufgetragen.

Zum Zeitpunkt t1 findet ein Ereignis, z.B. eine Kollision oder die Detektion einer bevorstehenden Kollision, statt, welches zu einer Aktivierung eines Sicherheitssystems mit Durchführung eines Bremseingriffs führt. Parallel dazu wird die Schreckreaktionsdauer Δts ermittelt. Das Überschreiten des Schwellenwerts durch das Ausmaß der Fahrpedalbetätigung während des Zeitintervalls Δts führt zu keinem Abbruch des Bremseingriffs. Erst die erneute Überschreitung des Schwellenwerts zum Zeitpunkt t2 deaktiviert den Bremseingriff.

Abb. 1 zeigt die Struktur der Erfindung als Blockschaltbild. Abhängig von den Ausgangssignalen der Sensoren 100 wird eine Sicherheitsfunktion 101 aktiviert, welche Eingriffe, z.B. Bremseingriffe, bei einem Kraftfahrzeug 102 durchführt.

In Block 103 wird die Schreckreaktionsdauer Δts des Fahrers ermittelt. Diese kann als konstant angenommen werden, es ist jedoch auch möglich, diese situationsabhängig zu wählen. Beispielsweise kann die Schreckreaktionsdauer abhängig von den Ausgangssignalen der Sensoren 100 sein.

Die Totzeit bzw. Schreckreaktionsdauer Δts wird einem Vergleichsblock 104 zugeführt, in welchem sie mit der Eingriffsdauer Δte verglichen wird. Ist Δts < Δte, d.h. nach Ablauf der Schreckreaktionsdauer Δts dauert der Eingriff, z.B. der Bremseingriff, noch an, dann wird ein Signal an den Eingriffsabbruchsblock 105 gegeben. Dieses Signal bedeutet, dass der Eingriff nun durch den Fahrer beendet werden kann, sofern der Fahrer diesen Wunsch äußert.

Der Fahrerwunsch wird in Block 106 erfasst, dieser Block beinhaltet beispielsweise einen Fahrpedalsensor, welcher eine Fahrpedalbetätigung durch den Fahrer erfasst. In Block 108 wird das in Block 106 erzeugte Fahrpedalbetätigungssignal mit einem in Block 107 hinterlegten Schwellenwert verglichen. Überschreitet das Fahrpedalbetätigungssignal den Schwellenwert, d.h. es liegt eine hinreichend starke Fahrpedalbetätigung durch den Fahrer vor, dann wird dies als Deaktivierungswunsch für das Sicherheitssystem durch den Fahrer interpretiert und an Block 105 weitergegeben. Dieser Block veranlasst dann, sofern die Schreckreaktionszeit abgelaufen ist, die Deaktivierung des Sicherheitssystems.

## Patentansprüche

1. Verfahren zur Deaktivierung einer Sicherheitsfunktion in einem Kraftfahrzeug, wobei die Sicherheitsfunktion nach Ihrer Aktivierung erst nach Ablauf einer Totzeit (Δts) durch den Fahrer deaktiviert werden kann (105), **dadurch gekennzeichnet, dass**
es sich bei der Sicherheitsfunktion um die fahrerunabhängige Auslösung eines Bremsvorgangs nach einer detektierten Kollision handelt.

2. Verfahren nach Anspruch 1, **dadurch gekennzeichnet, dass** die zeitliche Länge der Totzeit (Δts) situationsabhängig ist.

3. Verfahren nach Anspruch 1, **dadurch gekennzeichnet,**
- **dass** die zeitliche Länge der Totzeit (Δts) von einer die Intensität der detektierten Kollision kennzeichnenden Größe abhängt.

4. Verfahren nach Anspruch 1, **dadurch gekennzeichnet, dass**
- wenigstens eine auf den Fahrer wirkende Kraft ermittelt wird und
- die zeitliche Länge der Totzeit (Δts) von dieser auf den Fahrer wirkenden Kraft abhängt.

## Claims

1. Method for deactivating a safety function in a motor vehicle, wherein the safety function cannot be deactivated (105) by the driver after its activation until after the expiry of a delay (Δts), **characterized in that**
the safety function is the driver-independent triggering of the braking process after a detected collision.

2. Method according to Claim 1, **characterized in that** the chronological length of the delay (Δts) is situation-dependent.

3. Method according to Claim 1, **characterized**
- **in that** the chronological length of the delay (Δts) depends on a variable which characterizes the intensity of the detected collision.

4. Method according to Claim 1, **characterized in that**
- at least one force which acts on the driver is determined, and
- the chronological length of the delay (Δts) depends on this force acting on the driver.

## Revendications

1. Procédé pour désactiver une fonction de sécurité dans un véhicule, dans lequel la fonction de sécurité, après son activation, peut être désactivée par le conducteur (105) seulement après le déroulement d'un temps mort (Δts), **caractérisé en ce que**
la fonction de sécurité est le déclenchement indépendant du conducteur d'une opération de freinage après qu'une collision a été détectée.

2. Procédé selon la revendication 1, **caractérisé en ce que** la durée du temps mort (Δts) dépend de la situation.

3. Procédé selon la revendication 1, **caractérisé en ce que**
- la durée du temps mort (Δts) dépend d'une grandeur caractérisant l'intensité de la collision détectée.

4. Procédé selon la revendication 1, **caractérisé en ce que**
- au moins une force agissant sur le conducteur est détectée et
- la durée du temps mort (Δts) dépend de cette force agissant sur le conducteur.
